# EUROPEAN PATENT SPECIFICATION

(11) **EP 1 563 475 B1**
(45) Date of publication and mention of the grant of the patent: **27.09.2006**
(21) Application number: 03810922.9
(22) Date of filing: 13.11.2003
(51) Int. Cl.: G09F 3/03, G09F 3/14, B65D 63/10

(54) **TIE-TYPE SECURITY SEAL**
DURCHZIEHPLOMBE
INDICATEUR D'EFFRACTION DE TYPE CRAVATE

(30) Priority: 13.11.2002 BR 0204644
(43) Date of publication of application: 17.08.2005
(73) Proprietor: ELC PRODUTOS DE SEGURANCA INDUSTRIA E COMERCIO LTDA, 20910-060-Rio de Janeiro (BR)
(72) Inventor: DE LIMA CASTRO, André, Horto, Rio de Janeiro (BR)
(74) Representative: Nettleton, John Victor
(86) International application number: PCT/BR2003/000165
(87) International publication number: WO 2004/044871

(56) References cited:
- EP-A- 0 676 736
- FR-A- 2 632 431
- US-A- 3 562 870
- US-B1- 6 235 987
- US-B1- 6 328 356

## Description

### Prior art

This invention relates to tie-type security seals made of injection molded plastic material. Such type of seal is usually composed of a body with a locking cavity in the form of a passage through the body and provided with internal locking teeth, and - integral with the body - a strip or "tie" with one free end, which passes through the cavity and locks the strip with ratchet action, preventing its withdrawal, but allowing tightening of the tie, in the direction the strip was introduced.

Seals of this type, made of one single injection moulded piece of thermoplastic material, are generally of relatively low security, since there is a risk that a non authorized person releases the strip from the teeth by inserting a needle or the like, thus removing it. Such risk has been reduced by means of a new generation of seals in which a metallic insert element provided with teeth is introduced into the locking cavity. The insert element is inserted into the locking cavity in the longitudinal direction of the passage through which the seal strip is to pass when in use, and is then covered by a plastic disc that is fixed in place by means of a plastic welding seam. This results in two considerable inconveniences.

First of all, even though the use of the metallic insert element solved the problem of opening the seal by manipulation of the locking teeth, cutting of the welding seam is enough to remove the plastic disc and the insert element, together with the strip that is still passing through the disc and the insert element. Later, the assembly can be put back in the correct place and a new welding seam can be made. This kind of tampering is hard to detect.

Secondly, it is clear that manufacture of the seal becomes considerably more difficult because of the three additional steps of introducing the insert element, covering it with the plastic disc, and creating the welding seam. This should be compared to the manufacture of the conventional seal, which involves only the operation of plastic injection in an appropriate mould.

The first of the above mentioned disadvantages has recently been solved, as it can be seen in US patent 5,524,945, which is considered as the closest prior art. The solution proposed in that patent involves the sideways introduction of the metallic insert element, that is to say, in a direction transverse to the passage defined by the cavity for insertion of the seal strip. In this case, when the seal is closed, it becomes impossible to remove the insert element because the strip is passing through it in a direction at right angles to that in which it should be removed. However, the problem of complicated manufacture remains. In the case of US patent 5,524,945, it is necessary to mold the seal with a lateral opening in its body so that the metallic insert element can be inserted. At the same time, the body is formed with a small foldable flap that it is able to close the opening through which the insert was inserted, the flap then being bonded in that position by means of a welding seam.

### Abstract of the invention

An object of the present invention is to provide a tie-type security seal of injected thermoplastic material that makes uses of a metallic insert element, presents a high degree of security and is easy to manufacture.

The present invention thus refers to a tie-type security seal comprising a body of thermoplastic material with a locking cavity in the form of a passage through the body, a metallic insert element fixed in said cavity, and having at least one opening aligned with said passage, as well as a locking tooth, and an elongated strip of thermoplastic material, integral at one end with the body, and having another free end for insertion through said cavity in a first direction, where it is locked by said tooth against removal from the cavity in the opposite direction, the body and the strip having been manufactured by a plastic injection moulding operation.

In accordance with this invention, the seal is characterized by the fact that the metallic insert element is incorporated in said body of thermoplastic material during the injection operation.

The metallic insert element is preferably a substantially flat stamped piece with a main region cut out in its centre to define a plurality of teeth bent outwardly from the plane of the piece, defining an opening between the ends of the teeth for the strip to pass through, and, on each side and in the same plane as the central region, a lateral extension of which the end coinciend coincides with the side of said body. The end of each lateral extension of the metallic insert element can have the form of a two-pronged fork.

A seal in accordance with this invention can easily be manufactured in a plastic injection operation, together with a plurality of other similar seals. Thus, it is advantageous if each of the lateral extensions of the insert element is integral with a corresponding end of a lateral extension of a metallic insert element of another similar seal, the seal then being part of a "comb" of similar seals manufactured in the same injection operation, the individual seals being separable by breaking the junctions between the ends of the lateral extensions of the metallic insert elements.

### Brief description of the drawings

The invention will be better understood from the following detailed description, given by way of example, with reference to the attached drawings in which:
Figure 1 is an perspective view of a tie-type security seal incorporating an insert element or metallic clip in accordance with the present invention, the clip being indicated in dotted lines;
Figure 2 is similar to Figure 1, however, with the seal being seen from the other side;
Figure 3 is a perspective view of the clip, in the same orientation as Figure 1;
Figure 4 is a perspective view of the seal, in its closed configuration;
Figure 5 is an illustrative perspective of a plastic injection mould prepared for the manufacture of seals similar to that shown in Figures 1, 2 and 4; and
Figure 6 shows a "comb" of seals connected to each other, after manufacture and prior to use.

### Detailed description of a preferred embodiment of the invention

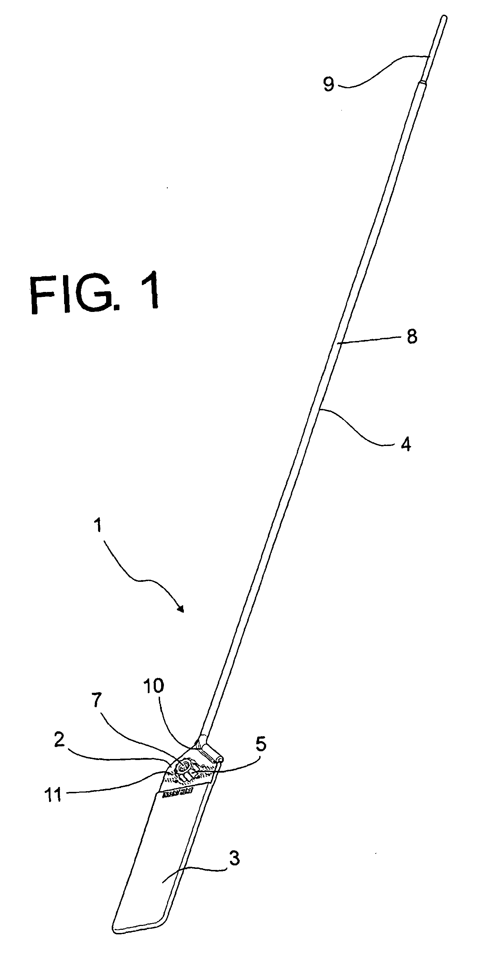

The seal 1 shown in Figures 1, 2 and 4 is moulded by injection of a thermoplastic, preferably polypropylene, nylon or polyethylene. The seal includes an body 2 integral, on one side, with a marking tab 3 for individualisation of the seal by means of a unique number, with or without equivalent information, such as a bar code, and with an elongated strip or tie 4 on the other side.

The body region 2 is formed with two protuberances 5 and 6 with a passage 7 through them to define a locking cavity for the strip 4. The cross section of passage 7 is substantially identical to that of the main part 8 of strip 4, which, however, becomes thinner at its free end 9 in order to facilitate its introduction ino the passage. The end or tip 9 of the strip is always be introduced though the side visible in Figure 1, which is indicated by the word "Entry," for a reason that will become clear later.

Strip 4 is connected to the body region 2 of the seal 1 by a weakened region 10 (see Figure 1) in order to permit manual rupture of the tie upon authorized opening of the article sealed by the seal.

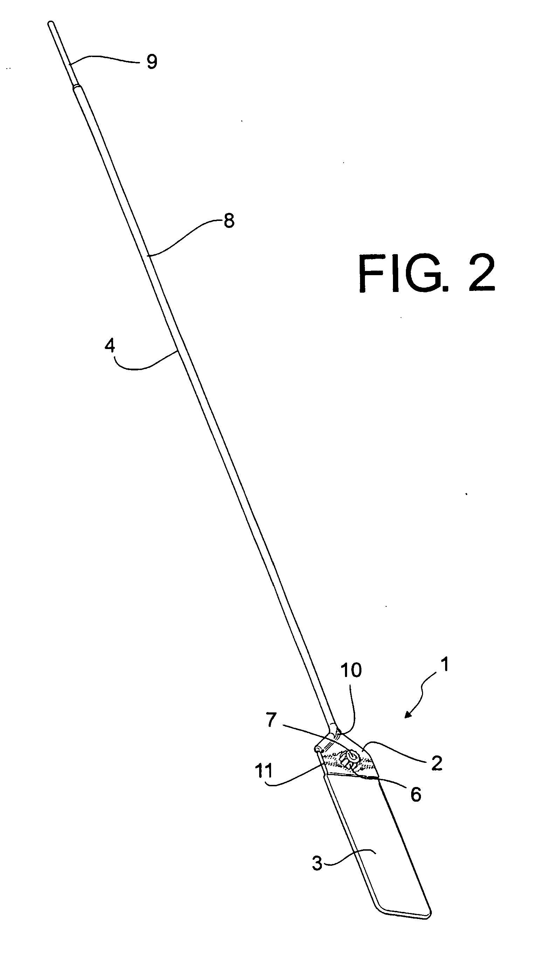

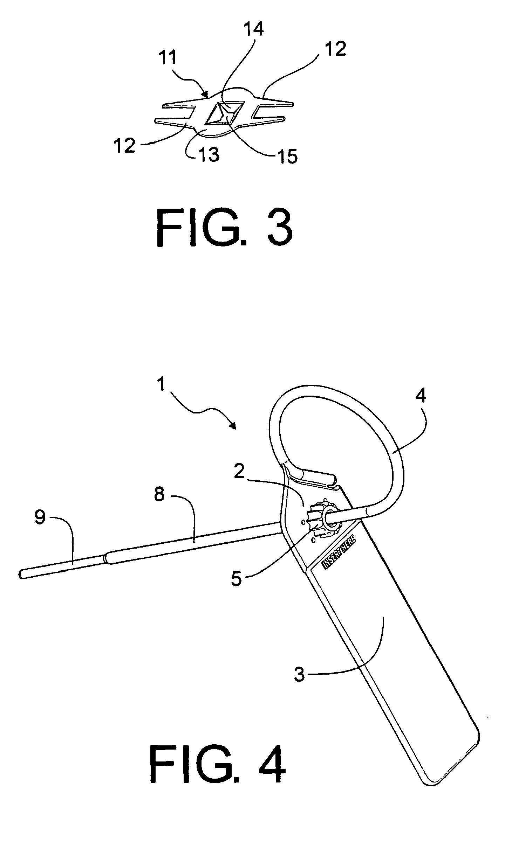

The most important characteristic of this invention, however, remains in the automatic incorporation in the seal 1, at the time of manufacture, of a metallic clip or insert element 11, as seen in Figures 1 and 2 in dotted lines - since it is located inside the plastic. Clip 11 is best seen in Figure 3. It comprises a stamped metallic part. Part 11 is substantially flat with lateral extensions 12 and the form of a two-pronged fork, the prongs ending on respective sides of the body region 2, and a central disc-shaped segment 13. The central region of the disc 13 is stamped to cut four segments bent outwardly from the surface of the remainder of the part, forming four teeth 14. The free ends of teeth 14 define an opening 15 with dimensions slightly smaller than those of the transverse section of the main part 8 of strip 4.

The clip 11 is incorporated into the seal in the same orientations shown in Figures 1 and 3, that is to say, teeth 14 are bent towards the introduction of strip 4 through the passage 7. In use, on being introduced through passage 7, strip 4 slightly opens teeth 14, and can be pulled from the exit side of passage 7 until the loop formed by the tie acquires the desired tightness. The teeth, however, prevent removal of strip 4, since their tips "bite" the strip, preventing its movement in that direction.

Figure 4 shows the seal 1 in its closed or sealed configuration.

The seal 1 shown in Figures 1, 2 and 4 has proven to be highly efficient, it being substantially impossible to open without damage so that tampering becomes easy to detect visually. Furthermore, seals made only of plastic, that is to say, without the clip, usually need a strip formed with teeth or locking cavities for cooperation with the teeth in the locking cavity. With the metallic insert clip 11, this is no longer essential.

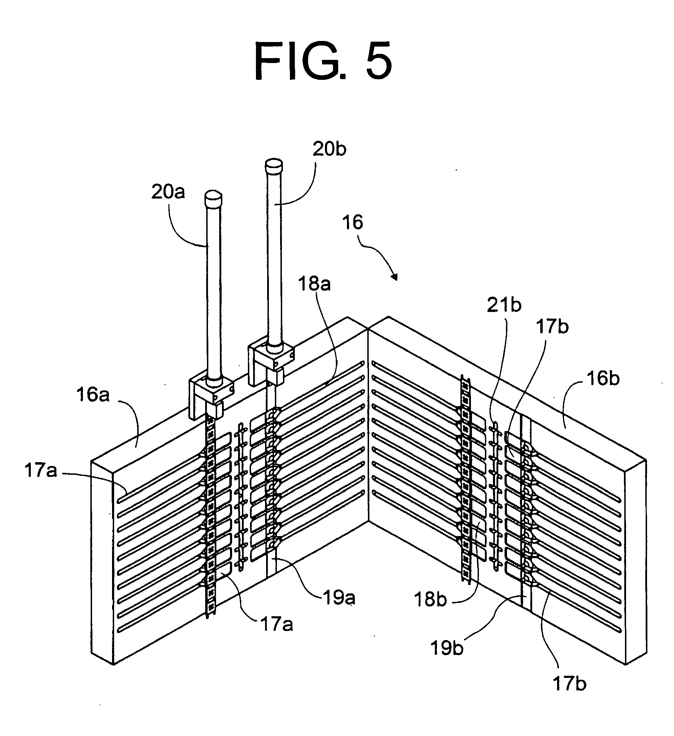

Considering now Figure 5, a plastic injection mould 16 comprises two plates or halves 16a and 16b formed with respective pairs of cavities 17a, 17b and 18a, 18b for injection moulding of two "combs" of seals 1. The plates 16a and 16b are formed with respective shallow grooves 19a and 19b that cross cavities 17b and 18a, respectively. Two pneumatic feeding devices 20a and 20b for strips of the clips 11 feed the clips during each opening of mould 16 so that one strip of clips is fed into groove 19a and another is fed into groove 19b every time the mould is to be closed, and in this position the plastic is injected through the channels indicated in general by reference numbers 21a and 21b.

After injection, the mould is opened, two "combs" of seals 1 are ejected, new strips of clips 11 are fed by the pneumatic feeders 20a and 20b, the mould is closed again, the injection is repeated and so on.

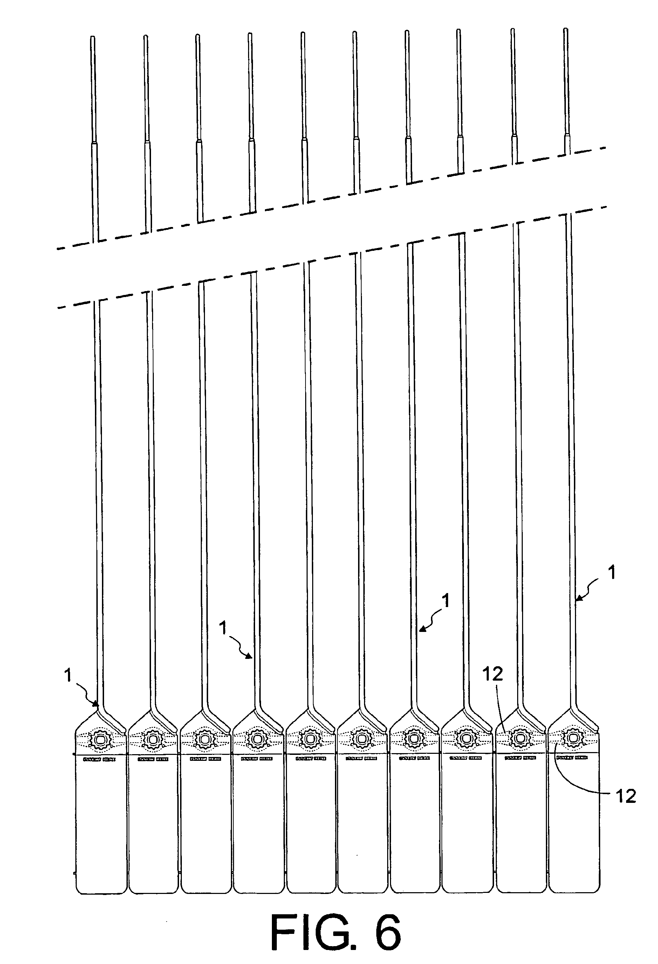

Figure 6 shows a "comb" of seals 1 connected to each other by the tips of the fork shaped lateral extensions 12 of its clips 11. This facilitates packing of the seals, and also prevents them from being entangled. Whenever it is necessary to use a seal 1, it is only necessary is to tear it from its "comb," and this occurs with a minimum of effort due to the extremely fragile connections between the tips of the extensions 12 of the clips.

The seal that constitutes the subject matter of this invention is extremely simple, easy to mass manufacture and highly efficient.

## Claims

1. Tie-type security seal comprising a body of thermoplastic material (2) with a locking cavity in the form of a passage (7) through the body, a metallic insert element (11) fixed in said cavity and formed with at least one through-opening (15) aligned with said passage (7) and also a locking tooth (14), and an elongated strip of thermoplastic material (4) integral at one end with the body (2) and having another free end for insertion through said passage in a first direction where it is locked by said tooth (14) to prevent removal from the cavity in the opposite direction, the body and the strip having been manufactured by a plastic injection operation, **characterized by** the fact that the metallic insert element (11) has been incorporated into said body of thermoplastic material (2) during the injection operation.

2. Security seal according to claim 1, **characterized in that** the passage (7) that defines the cavity in the body (2) of the seal has a cross section substantially identical to that of the strip (4), at least in the greater part (8) of the length of the latter.

3. Security seal according to claim 2, **characterized in that** the free end portion (9) of the strip (4) has a smaller cross section than the remaining part of the strip to facilitate the initial introduction through said passage (7).

4. Security seal according to claim 1, 2 or 3, **characterized in that** the metallic insert element is a substantially flat part (11) stamped with a main region (13) cut out in its centre to define a plurality of teeth (14) bent outwardly from the plane of the part, defining an opening (15) between the ends of the teeth for passage of the strip (4), and, on each side and in the same plane as the central region (13), a lateral extension (12) of which the end coincides with the side of said body.

5. Security seal according to claim 4, **characterized in that** said end of each lateral extension (12) of the metallic insert element has the form of a two-pronged fork.

6. Security seal according to claim 4 or 5, **characterized in that** the end of each of said side extensions (12) is integral with a corresponding end of a side extension (12) of a metallic insert element (11) of another similar seal, and the seal (1) comprises one element in a "comb" of similar seals manufactured in the same injection operation, the individual seals being separable by breaking the junctions between the ends of the lateral extensions (12) of the metallic insert elements (11).

## Patentansprüche

1. Binderartige Sicherheitsplombe umfassend einen Körper aus thermoplastischem Material (2) mit einem Sperrhohlraum in der Form eines Durchgangs (7) durch den Körper, einem metallischen Einsatzelement (11), das fest in dem Hohlraum ist und mit mindestens einer Durchgangsöffnung (15), die mit dem Durchgang (7) und auch einem Sperrzahn (14) ausgerichtet ist, ausgestaltet ist, und einem länglichen Streifen von thermoplastischem Material (4), der an einem Ende einstückig mit dem Körper (2) ist und ein anderes freies Ende zum Einsetzen durch den Durchgang in eine erste Richtung aufweist, in der er durch den Zahn (14) verriegelt ist, um eine Entfernung aus dem Hohlraum in die entgegengerichtete Richtung zu verhindern, wobei der Körper und der Streifen durch einen Kunststoffspritzvorgang hergestellt wurden, **gekennzeichnet durch** die Tatsache, daß das metallische Einsatzelement (11) in den Körper des thermoplastischen Materials (2) während des Spritzvorgangs eingesetzt wurde.

2. Sicherheitsplombe gemäß Anspruch 1, **dadurch gekennzeichnet, daß** der Durchgang (7), der den Hohlraum in dem Körper (2) der Plombe definiert, einen im wesentlichen identischen Querschnitt zu dem Streifen (4) aufweist, zumindest in dem größeren Teil (8) in der Länge des letzteren.

3. Sicherheitsplombe gemäß Anspruch 2, **dadurch gekennzeichnet, daß** der freie Endabschnitt (9) des Streifens (4) einen kleineren Querschnitt als der sonstige Teil des Streifens aufweist, um die anfängliche Einführung durch die Passage (7) zu erleichtern.

4. Sicherheitsplombe gemäß Anspruch 1, 2 oder 3, **dadurch gekennzeichnet, daß** das metallische Einsatzelement ein im wesentlichen flaches Teil (11) ist, das mit einem Hauptbereich (13) gestanzt ist, der in seinem Zentrum ausgeschnitten ist, um eine Mehrzahl von Zähnen (14) zu definieren, die auswärts von der Ebene des Teils gebogen sind, um eine Öffnung (15) zwischen den Enden der Zähne zum Durchgang des Streifens (4) zu definieren, und an jeder Seite und in der gleichen Ebene wie der zentrale Bereich (13) eine Querverlängerung (12) aufweist, deren Ende mit der Seite des Körpers übereinstimmt.

5. Sicherheitsplombe gemäß Anspruch 4, **dadurch gekennzeichnet, daß** das Ende jeder Querverlängerung (12) des metallischen Einsatzelements die Form einer zweizinkigen Gabel aufweist.

6. Sicherheitsplombe gemäß Anspruch 4 oder 5, **dadurch gekennzeichnet, daß** das Ende jeder der Querverlängerungen (12) einstückig mit einem entsprechenden Ende einer Seitenverlängerung (12) eines metallischen Einsatzelements (11) einer anderen ähnlichen Plombe ist, und die Plombe (1) ein Element in einem "Kamm" von ähnlichen Plomben, die in demselben Spritzvorgang hergestellt sind, umfaßt, wobei die einzelnen Plomben durch Brechen der Verbindungen zwischen den Enden der Querverlängerungen (12) der metallischen Einsatzelemente (11) trennbar sind.

## Revendications

1. Indicateur d'effraction de type lien comprenant un corps en matière thermoplastique (2) avec une cavité de verrouillage sous la forme d'un passage (7) à travers le corps, un élément insert métallique (11) fixé dans ladite cavité et formé avec au moins une ouverture (15) alignée avec ledit passage (7) et également une dent de verrouillage (14), et une bande allongée de matière thermoplastique (4) faisant partie intégrante, à une extrémité, du corps (2) et ayant une autre extrémité libre à des fins d'insertion à travers ledit passage dans une première direction lorsqu'elle est verrouillée par ladite dent (14) pour empêcher son retrait de la cavité dans la direction opposée, le corps et la bande ayant été fabriqués par une opération d'injection plastique, **caractérisé par le fait que** l'élément insert métallique (11) a été incorporé dans ledit corps de matière thermoplastique (2) pendant l'opération d'injection.

2. Indicateur d'effraction selon la revendication 1, **caractérisé en ce que** le passage (7) qui définit la cavité dans le corps (2) de l'indicateur a une section transversale sensiblement identique à celle de la bande (4), au moins dans la plus grande partie (8) de la longueur de cette dernière.

3. Indicateur d'effraction selon la revendication 2, **caractérisé en ce que** la partie d'extrémité libre (9) de la bande (4) a une section transversale plus petite que la partie restante de la bande pour faciliter l'introduction initiale à travers ledit passage (7).

4. Indicateur d'effraction selon la revendication 1, 2 ou 3, **caractérisé en ce que** l'élément insert métallique est une partie sensiblement plate (11) poinçonnée avec une région principale (13) découpée en son centre pour définir une pluralité de dents (14) pliées vers l'extérieur depuis le plan de la pièce, définissant une ouverture (15) entre les extrémités des dents pour le passage de la bande (4), et, sur chaque côté et sur le même plan que la région centrale (13), une extension latérale (12) dont l'extrémité coïncide avec le côté dudit corps.

5. Indicateur d'effraction selon la revendication 4, **caractérisé en ce que** ladite extrémité de chaque extension latérale (12) de l'élément insert métallique a la forme d'une fourche à deux dents.

6. Indicateur d'effraction selon la revendication 4 ou 5, **caractérisé en ce que** l'extrémité de chacune desdites extensions latérales (12) fait partie intégrante d'une extrémité correspondante d'une extension latérale (12) d'un élément insert métallique (11) d'un autre indicateur similaire, et l'indicateur (1) comprend un élément dans un « peigne » d'indicateurs similaires fabriqués lors de la même opération d'injection, les éléments individuels étant séparables en brisant les jonctions entre les extrémités des extensions latérales (12) des éléments inserts métalliques (11).
